# EUROPEAN PATENT APPLICATION

(11) **EP 4 220 928 A1**
(43) Date of publication of application: **02.08.2023**
(21) Application number: 21874037.1
(22) Date of filing: 02.08.2021
(51) Int. Cl.: H02M 7/04, H02M 3/04, H02M 3/24, H02J 7/02

(54) **POWER SUPPLY APPARATUS AND CHARGING METHOD, SYSTEM, AND STORAGE MEDIUM**

(30) Priority: 30.09.2020 CN 202011066516
(71) Applicant: GUANGDONG OPPO MOBILE TELECOMMUNICATIONS CORP., LTD., Dongguan, Guangdong 523860 (CN); Powerland Technology Inc., Jiangsu 210001 (CN)
(72) Inventor: TIAN, Chen, Dongguan, Guangdong 523860 (CN); ZHU, Jingpeng, Nanjing, Jiangsu 210001 (CN); ZHANG, Jialiang, Dongguan, Guangdong 523860 (CN); XU, Ming, Nanjing, Jiangsu 210001 (CN)
(74) Representative: Mewburn Ellis LLP
(86) International application number: PCT/CN2021/110141
(87) International publication number: WO 2022/068375

(57) **Abstract**

The present disclosure provides a power supply apparatus, a charging method, system storage medium. The power supply apparatus comprises a first-stage conversion circuit, a second-stage conversion circuit, and a valley-fill circuit. The first-stage conversion circuit is used for converting a rectified DC voltage to obtain a first DC voltage; the second-stage conversion circuit is used for converting the first DC voltage and outputting a second DC voltage, the second DC voltage being lower than the voltage value of the first DC voltage; the valley-fill circuit is used, if the second DC voltage is lower than a set value, for supplying power to the output end of the power supply apparatus so that the output voltage of the power supply apparatus is a constant DC voltage. The present disclosed technical solution is capable of reducing the size of a power supply apparatus.

## Description

### CROSS-REFERENCE TO RELATED APPLICATION(S)

This application claims priority to Chinese Patent Application No. 202011066516.8, filed September 30, 2020, entitled "Power Supply Apparatus and Charging Method", the entire disclosures of which are incorporated herein by reference.

### TECHNICAL FIELD

The present disclosure relates to the technical field of charging, and in particular, to a power supply apparatus, a charging method, a system, and a storage medium.

### BACKGROUND

With the widespread application of electronic devices (such as smartphones, tablet computers, and other "smart" terminal devices), their functions are increasing, but their power consumption is also increasing accordingly, requiring frequent charging. In order to speed up the charging speed of such electronic devices, the corresponding power adapter needs to be able to output more power.

However, the current power adapters capable of outputting relatively high power are all bulky, inconvenient to carry around, and have poor user experience.

The above information disclosed in this Background section is only for enhancing understanding of the background of the disclosure and therefore it may contain information that does not form the prior art that is already known to a person of ordinary skill in the art.

### SUMMARY

The purpose of the present disclosure is to provide a power supply apparatus, a charging method, a system, and a storage medium, so as to solve one or more problems caused by the deficiencies of the related art at least to a certain extent.

According to a first aspect of the present disclosure, a power supply apparatus is provided. The apparatus can include a rectifier circuit configured to rectify the input alternating current (AC) voltage; a first-stage conversion circuit configured to convert the rectified direct current (DC) voltage to obtain a first DC voltage; and a second-stage conversion circuit. The second-stage conversion circuit can be connected to the output end of the power supply apparatus, and the second-stage conversion circuit can be configured to convert the first DC voltage to output a second DC voltage. The voltage value of the second DC voltage can be lower than the voltage value of the first DC voltage. The apparatus can also include a valley-fill circuit that is connected to the output end of the power supply apparatus. The valley-fill circuit can be configured to supply power to the output end of the power supply apparatus when the second DC voltage is lower than a set value, so that the output voltage of the power supply apparatus is a constant DC voltage.

According to a second aspect of the present disclosure, a charging method is provided. The method can include rectifying the input alternating current (AC) voltage through a rectifier circuit; controlling a first-stage conversion circuit to convert the rectified direct current (DC) voltage to obtain a first DC voltage; controlling a second-stage conversion circuit to be connected to the output end of the power supply apparatus, and the second-stage conversion circuit being configured to convert the first DC voltage and output a second DC voltage. The voltage value of the second DC voltage can be lower than the voltage value of the first DC voltage. The method can also include controlling the valley-fill circuit to supply power to the output end of the power supply apparatus when the second DC voltage is lower than the set value, so that the output voltage of the power supply apparatus is a constant DC voltage.

According to a third aspect of the present disclosure, an electronic device system is provided. The electronic device system can include an electronic device and the above-mentioned power supply apparatus. The power supply apparatus can be configured to charge the electronic device.

According to a fourth aspect of the present disclosure, a computer-readable storage medium is provided, on which a computer program is stored. The computer program can implement the aforementioned method when executed by a processor.

It is to be understood that both the foregoing general description and the following detailed description are exemplary and only explanatory. They should not be construed to have any limiting effect on the present application.

### DESCRIPTION OF THE DRAWINGS

The accompanying drawings, which are incorporated in and constitute a part of this specification, illustrate embodiments consistent with the disclosure and together with the description serve to explain the principles of the disclosure. The drawings in the following description are only some embodiments of the present disclosure, and for those of ordinary skill in the art, other drawings can also be obtained from these drawings without creative effort.
Figure 1 is a block diagram showing a circuit structure according to an embodiment of a power supply apparatus of the present disclosure.
Figure 2 is a block diagram showing a circuit structure according to another embodiment of the power supply apparatus of the present disclosure.
Figure 3 is a schematic diagram of a circuit structure according to an embodiment of a power supply apparatus of the present disclosure.
Figure 4 is a simulation waveform of partial voltage nodes in the circuit of the power supply apparatus according to the present disclosure.
Figure 5 is a simulation waveform of the output voltage of the power supply apparatus circuit, the output voltage of the second-stage conversion circuit, and the output voltage of the valley-fill circuit according to the present disclosure.
Figure 6 is a flowchart showing an embodiment of a charging method according to the present disclosure.

### DETAILED DESCRIPTION

Exemplary embodiments will now be described more fully with reference to the accompanying drawings. Exemplary embodiments, however, can be embodied in various forms and should not be construed as limited to the examples set forth herein; rather, these embodiments are provided so that this disclosure will be thorough and complete, and will fully convey the concept of exemplary embodiments to those skilled in the art. The drawings are merely schematic illustrations of the present disclosure and are not necessarily drawn to scale. The same reference numerals in the drawings denote the same or similar parts, and thus their repeated descriptions will be omitted.

Furthermore, the described features, structures, or characteristics may be combined in any suitable manner in one or more embodiments. In the following description, numerous specific details are provided in order to give a thorough understanding of the embodiments of the present disclosure. However, those skilled in the art will appreciate that the technical solutions of the present disclosure may be practiced without one or more of the specific details, or other methods, components, devices, steps, etc. may be employed. In other instances, well-known structures, methods, devices, implementations, materials, or operations have not been shown or described in detail to avoid obscuring aspects of the present disclosure.

In the present disclosure, unless otherwise expressly specified and limited, the terms "installed", "joined", "connected", "fixed" and other terms should be understood in a broad sense, for example, it may be a fixed connection or a detachable connection or integrated.; it can be a mechanical connection, an electrical connection or can communicate with each other; it can be directly connected, or indirectly connected through an intermediate medium, or the internal communication between two elements or the interaction relationship between the two elements. For those of ordinary skill in the art, the specific meanings of the above terms in the present disclosure can be understood according to specific situations.

In addition, the terms "first" and "second" are only used for descriptive purposes, and should not be construed as indicating or implying relative importance or implying the number of indicated technical features. Thus, a feature defined as "first" or "second" may expressly or implicitly include one or more of those features. In the description of the present disclosure, "plurality" means at least two, such as two, three, etc., unless expressly and specifically defined otherwise.

The preferred embodiments of the present disclosure will be described in further detail below with reference to the accompanying drawings of the present specification.

This disclosure describes a power supply apparatus, which can be connected to a device-to-be-charged in a wired or wireless manner, and provides power for the device-to-be-charged to charge a battery in the device-to-be-charged. Common power supply apparatus are adapters, chargers, and the like. In the following embodiments, an adapter is used merely as an example for descriptive purposes.

An adapter according to embodiments of the present disclosure can work in a constant voltage mode, and its output voltage can be basically constant, such as 5V, 9V, 12V or 20V. The output current can be a pulsating DC current (the direction does not change, and the amplitude changes with time), or a constant DC current (the direction and amplitude do not change with time). The voltage output by the relevant adapter is not suitable to be directly loaded to both ends of the battery, but needs to be converted by a conversion circuit in the electronic device to obtain the expected charging voltage and/or charging current of the battery in the electronic device.

The adapter can also function as a voltage follower. That is, the adapter and the electronic device-to-be-charged conduct two-way communication. The adapter feeds back the required charging voltage and charging current according to the electronic device, so that the voltage and current output can be adjusted, so that the output voltage and current can be directly loaded on the battery of the electronic device to charge the battery. In this way, the electronic device does not need to adjust the charging voltage and charging current again.

The conversion circuit can control the charging voltage and/or charging current of the battery during different charging stages. For example, at the constant current charging stage, the conversion circuit can utilize the current feedback loop to make the magnitude of the current entering the battery meet the expected first charging current of the battery. At the constant voltage charging stage, the conversion circuit can make use of the voltage feedback loop to make the voltage applied to both ends of the battery meet the expected charging voltage of the battery. In the trickle charging stage, the conversion circuit can utilize the current feedback loop to make the current entering the battery meet the expected second charging current of the battery (the second charging current being less than the first charging current).

For example, when the voltage output by the relevant adapter is greater than the expected charging voltage of the battery, the conversion circuit can perform step-down transformation processing on the voltage output by the relevant adapter, so that the magnitude of the charging voltage obtained after the step-down transformation meets the expected charging voltage of the battery.

The device-to-be-charged can be, for example, a terminal or an electronic device, and the terminal or electronic device can be a mobile phone, a game console, a tablet computer, an e-book reader, a smart wearable device, an MP4 (Moving Picture Experts Group Audio Layer IV) player, smart home equipment, an AR (Augmented Reality) equipment, a VR (Virtual Reality) equipment and other mobile terminals; it can also be rechargeable electronic device with a charging function, such as a mobile power (such as power bank, travel charger), an electronic cigarette, a wireless mouse, a wireless keyboard, a wireless earphone, a Bluetooth speaker, etc.; or, a personal computer (Personal Computer, PC), such as a laptop computer and a desktop computer.

An adapter, as described herein, can obtain power from a mains (e.g. wall power). After voltage conversion, the adapter transmits power to a charging circuit in an electronic device through a data cable or charging interface-thus a battery-to-be-charged receives power from the charging circuit. The charging interface may be, for example, a USB 2.0 interface, a Micro USB interface or a USB TYPE-C interface. In some embodiments, the charging interface may also be a lightning port, or any other type of parallel port or serial port that can be used for charging. The charging interface can be connected with the adapter through a data cable.

The adapter in this embodiment can input alternating current and direct current, other than commercial power.

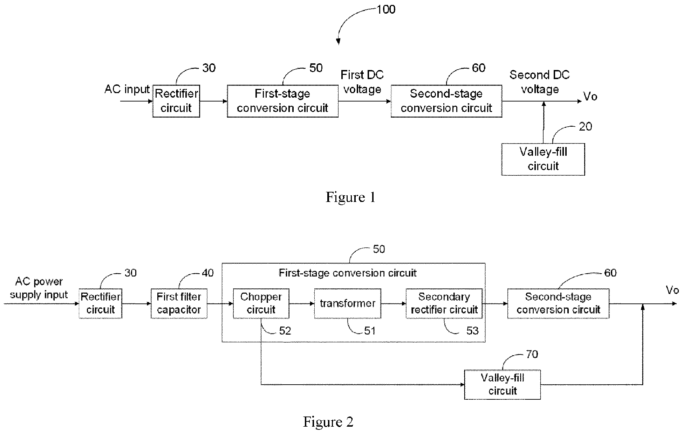

FIG. 1 is a block diagram showing a circuit structure of an embodiment of a power supply apparatus 100 according to the present disclosure. In one embodiment, the power supply apparatus 100 includes a first-stage conversion circuit 50, a second-stage conversion circuit 60, and a valley-fill circuit. The first-stage conversion circuit 50 is configured to convert the rectified DC voltage to obtain the first DC voltage. The second-stage conversion circuit 60 is connected to the output end Vo of the power supply apparatus, and the second-stage conversion circuit 60 is used for isolated transformation of the first DC voltage and outputting a second DC voltage. The voltage value of the second DC voltage is lower than the voltage value of the first DC voltage. The valley-fill circuit 20 is connected to the output end of the power supply apparatus 100, and the valley-fill circuit 20 is used for supplying power to the second-stage conversion circuit 60 when the second DC voltage is lower than the set value, so that the output second DC voltage is a constant DC voltage.

In the related art, the input AC power is rectified by a rectifier bridge to become a pulsating DC power, which is generally filtered by an electrolytic capacitor to obtain a DC voltage with less fluctuation. However, the size of the electrolytic capacitor is relatively large, which limits the miniaturization of the power supply apparatus 100.

In an embodiment of the present disclosure, the power supply apparatus 100 further includes one or more filter capacitors, and the capacity of the filter capacitors in this embodiment of the present application may be less than a preset threshold, for example, may be less than 900uF, or less than 500uF, or less than 100uF. When the capacity of the filter capacitor is less than the preset threshold, the volume of the filter capacitor is relatively small, so the volume of the power supply apparatus 100 can be reduced as much as possible.

Specifically, the types of filter capacitors can include multilayer ceramic capacitors (MLCC), film capacitors, ceramic capacitors, and electrolytic capacitors with a capacity less than the first preset threshold; these capacitors can be chip capacitors. The energy density of these capacitors is relatively high, so that energy storage can be performed to the greatest extent based on the small size, so that the size (e.g. volume) of the power supply apparatus 100 can be reduced.

The filter capacitor may be in the form of a combination of one or more capacitors, and the connection relationship may be in series or in parallel, which is mainly determined according to the required capacity of the capacitor.

It should be understood that in order to reduce the volume of the power supply apparatus 100, the volume of the filter capacitor may be reduced. In other words, embodiments of the present application may not consider the capacity of the filter capacitor, and the principles of the present application may be applied as long as the volume of the power supply apparatus 100 is reduced.

In the power supply apparatus 100 provided by the embodiments of the present application, the capacity of the filter capacitor in the power supply apparatus 100 is less than a certain threshold, and the volume of the filter capacitor can be reduced such that the volume of the power supply apparatus 100 can be reduced. In this way, the overall volume of power supply apparatus 100 can be miniaturized.

According to the different circuits of the specific power supply apparatus 100, the setting position of the filter capacitor also changes correspondingly. The specific connection method of the filter capacitor is not limited here. In the following embodiments, examples of the setting position of the filter capacitor will be given in combination with the specific circuit structures.

In the power supply apparatus 100 provided by the embodiment of the present application, the capacity of the filter capacitor in the power supply apparatus 100 is less than a certain threshold, and the volume of the filter capacitor can be reduced, thereby the volume of the power supply apparatus 100 can be reduced, and the miniaturization of volume of power supply apparatus 100 can be realized.

Additionally, according to certain embodiments, a valley-fill circuit 20 can be provided in order to address problems of a large voltage ripple when a capacitor with lower capacity is used. The valley-fill circuit 20 can directly supply power to the output end of the power supply apparatus 100, so that the output voltage of the power supply apparatus 100 matches the target output voltage of the power supply apparatus 100. In this way, stability of the output voltage of the power supply apparatus 100 can be improved.

In conclusion, the present embodiment can miniaturize the power supply apparatus 100 and improve the stability of the output voltage of the power supply apparatus 100.

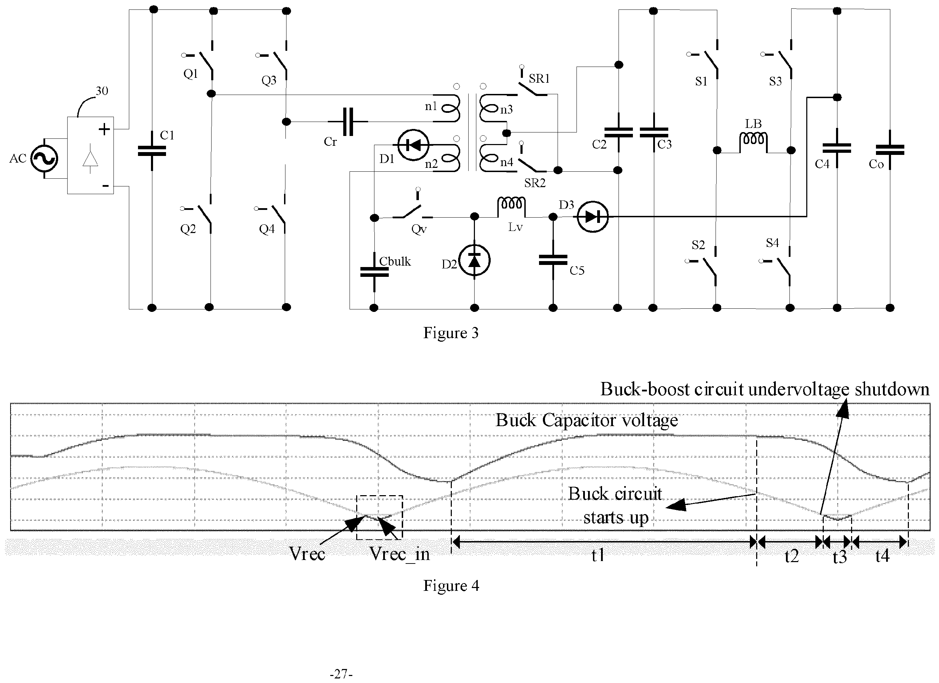

With reference to FIG. 2 and 3, FIG. 2 is a block diagram showing a circuit structure of the power supply apparatus 100 according to another embodiment of the present disclosure; and FIG. 3 is a schematic diagram showing a circuit structure of the power supply apparatus 100 according to an embodiment of the present disclosure. In this embodiment, the rectifier circuit 30 can be used to rectify the alternating current to form a pulsating direct current. The rectifier circuit 30 may be a rectifier bridge.

A first-stage conversion circuit 50 is provided at the subsequent stage of the rectifier circuit 30, and the first-stage conversion circuit 50 is used for converting the rectified DC voltage to obtain a first DC voltage. Specifically, the first-stage conversion circuit 50 includes a chopper circuit 52, a transformer 51, and a secondary rectifier circuit 53. That is, after the rectifier circuit 30 rectifies the alternating current (AC) power supply into a pulsating direct current, the chopper circuit 52 performs direct-current inversion on the pulsating direct current. The transformer 51 further converts the inverted AC voltage, and the secondary rectifier circuit 53 further rectifies the AC current output by the secondary winding of the transformer 51 to form a DC current.

In this embodiment, the chopper circuit 52 adopts an inverter bridge composed of four high-speed switch tubes, so as to perform high-frequency inversion on the rectified pulsating DC. Illustratively, the chopper circuit 52 can include four switch tubes, which are Q1, Q2, Q3, and Q4, respectively. Among them, Q1 and Q3 are the upper bridge arms, and Q2 and Q4 are the lower bridge arms. The turn-on and turn-off of Q1, Q2, Q3, and Q4 are controlled by the control circuit in the power supply apparatus 100. The control circuit can be a CPU, MCU, SOC, etc.

In this embodiment, Q1, Q2, Q3, and Q4 are respectively controlled to be turned on and off by the control circuit, so that the chopper circuit 52 can be operated in a full-bridge operating mode or a half-bridge operating mode. The full-bridge operating mode can perform full-bridge inversion on the pulsating DC output from the rectifier circuit 30. The half-bridge operating mode can perform half-bridge inversion on the pulsating DC output from the rectifier circuit 30.

In one embodiment, when the input pulsating DC voltage rises to the first voltage range, the chopper circuit 52 works in the half-bridge operating mode under the control of the control circuit. When the input pulsating DC voltage drops to the second voltage range, the chopper circuit 52 operates in the full-bridge operating mode under the control of the control circuit. The voltages in the first voltage range are all greater than the voltages in the second voltage range.

The specific values of the first voltage range and the second voltage range can be preset by the manufacturer, and can also be specifically set by the control circuit according to the fluctuation of the alternating current (AC) power supply.

Illustratively, the first voltage range can correspond to a lower voltage range and can be set to 90V to 130V; the second voltage range can correspond to a higher voltage range and can be set to 180V to 264V. Voltage here refers to AC voltage.

By providing a voltage sampling circuit in the power supply apparatus 100, the AC voltage at the current moment or the average AC voltage within a period of time can be detected. Further, the control circuit controls the operating mode of the chopper circuit 52 according to the AC voltage.

In this embodiment, when the AC voltage is low, the chopper circuit 52 adopts the full-bridge inverter operating mode to increase the average voltage after the inversion. When the AC voltage is high, the chopper circuit 52 adopts a half-bridge inverter operating mode to reduce the average voltage after the inversion, so that the output of the chopper circuit 52 (and the output of the secondary of the transformer 51 ) changes within a narrow range within a wide variation range of the AC voltage. In this way, the influence of large voltage fluctuation caused by the use of a lower-capacity capacitor is reduced, and the working stability of the second-stage conversion circuit 60 at the rear end can also be improved.

In FIG. 3, the transformer 51 plays the role of isolation and voltage transformation. The transformer 51 may specifically be a step-up transformer 51 or a step-down transformer 51 according to the relative relationship between the voltage level of the alternating current (AC) power supply and the target output voltage level to be output by the power supply apparatus 100.

The first end of the primary winding n1 of the transformer 51 is connected between Q1 and Q2, and the second end is connected between Q3 and Q4 through a capacitor Cr. The capacitor Cr may be composed of one or more capacitors. As an example, the capacitor Cr is a resonant capacitor, and the leakage inductance and excitation inductance of the transformer 51 form a resonant inductance, thereby forming a resonant circuit. Through the oscillation of the resonant circuit, soft switching is realized, which can achieve a high degree of electric energy conversion efficiency.

The circuit structure of the power supply apparatus 100 of the present embodiment can require less capacitors than other power supply apparatuses 100 with the equivalent output power. This can thereby reduce the size of the power supply apparatus 100. In the case where the output voltage of the rectifier circuit 30 has a wider range, the power output efficiency can be improved by using the circuit structure in this embodiment, for example, because of the use of capacitors having a small volume.

The secondary rectifier circuit 53 is connected to the secondary windings n3 and n4 of the transformer 51, and is used for rectifying the AC current output by the secondary winding. Specifically, the secondary rectifier circuit 53 may adopt a synchronous rectifier circuit or other types of rectifier circuits. Illustratively, the synchronous rectifier circuit includes switches SR1, SR2; SR1, SR2 can use MOS transistors.

In the positive half cycle of the AC voltage on the secondary winding, SR2 is turned on, and SR1 is turned off, such that SR2 acts as a rectifier. In the negative half cycle of the AC voltage on the secondary winding, SR2 is turned off, and SR1 is turned on, such that SR1 acts as a rectifier. In this way, rectification of the positive and negative half cycles of the AC voltage on the secondary winding can be realized.

As before, the second-stage conversion circuit 60 is connected to the output end of the first-stage conversion circuit 50 for converting the first DC voltage and outputting a second DC voltage. The voltage value of the second DC voltage is lower than the voltage value of the first DC voltage. The output end of the second-stage conversion circuit 60 is the output end of the power supply apparatus 100. The second-stage conversion circuit 60 may include one or more cascades of a buck circuit, a boost circuit, a buck-boost circuit, and a charge pump circuit.

In a specific embodiment, the second-stage conversion circuit 60 is a buck-boost circuit, the input end of the buck-boost circuit is connected to the output end of the secondary rectifier circuit 53, and the output end of the buck-boost circuit is the output end of the power supply apparatus 100.

The buck-boost circuit has a boost function and a buck function. Under the control of a control circuit, the buck-boost circuit 60 can switch between the boost function and the buck function according to the output value of the first-stage conversion circuit 50, so that the output voltage of buck-boost is maintained at a stable voltage value.

In FIG. 3, the buck-boost circuit includes high frequency switches S1, S2, S3, S4, and an inductor LB. Illustratively, the input end of the buck-boost circuit is further connected with a second capacitor C2 and a third capacitor C3. The other ends of the second capacitor C2 and the third capacitor C3 are both grounded. Both the second capacitor C2 and the third capacitor C3 can use multilayer ceramic capacitors (MLCC), film capacitors, ceramic capacitors and electrolytic capacitors with a capacity less than the first preset threshold; these capacitors can be in the form of chip capacitors.

By setting a capacitor at the input end of the buck-boost circuit, the stability of the input voltage can be improved, and avoid the buck-boost circuit working in a current-limiting state or cease working due to the input voltage reaching a low point due to fluctuations.

The output end of the buck-boost circuit is also connected with a fourth capacitor C4 and a capacitor Co. The other ends of the fourth capacitor C4 and the capacitor Co are both grounded. The fourth capacitor C4 and the capacitor Co can all be chip capacitors, film capacitors, ceramic capacitors, and electrolytic capacitors with capacities less than the first preset threshold, so as to reduce the volume of the power supply apparatus 100.

By setting a capacitor at the output end of the buck-boost circuit, the stability of the output voltage is improved.

Please continue to refer to Figure 2 and Figure 3. In the following embodiments, embodiments of the valley-fill circuit 20 of the present application will be described.

As before, the valley-fill circuit 20 in the present disclosure can be connected to the output end of the second-stage conversion circuit 60 to supply power to the output end of the second-stage conversion circuit 60 at an appropriate time, so that the output voltage of the power supply apparatus 100 is a constant DC voltage.

Here, the output set value of the power supply apparatus 100 is generally the expected output voltage of the power supply apparatus 100. Specifically, it can be determined according to the current charging mode, or can be set by the user. Under normal circumstances, the output voltage of the second-stage conversion circuit 60 matches the set value of the power supply apparatus 100. The matching here refers to the difference between the output voltage of the second-stage conversion circuit 60 and the set value of the power supply apparatus 100 is less than a certain value. In this case, it is considered that the output voltage of the second-stage conversion circuit 60 meets the required set value.

The output end of the valley-fill circuit 20 and the output end of the second-stage conversion circuit 60 are both connected to the output end of the power supply apparatus 100. The valley-fill circuit 20 stores energy when the output voltage of the second-stage conversion circuit 60 reaches the peak, and supplies power to the output end Vo of the power supply apparatus 100 when the output voltage of the secondary conversion circuit 60 reaches a valley. The valley-fill energy goes through the fewest power processing steps, and the energy utilization rate is relatively high, so relatively less power needs to be provided by the valley-fill circuit 20.

In addition, due to the better utilization efficiency of the valley-fill energy, less capacity of the energy storage capacitor in the valley-fill circuit 20 is required, so the number of energy storage capacitors can be reduced, thereby further reducing the volume of the power supply apparatus 100.

The valley-fill circuit 20 may be controlled by the above-mentioned control circuit, or it may have an independent control chip inside the valley-fill circuit 20, and a communication connection is established between the chip and the control circuit of the power supply apparatus 100, so that under the overall regulation of the control circuit, the valley-fill circuit 20 and the second-stage conversion circuit 60 can jointly output voltage.

In some embodiments, when the difference between the set value and the output voltage of the second-stage conversion circuit is greater than or equal to the first difference, the valley-fill circuit 20 supplies power to the output end Vo of the power supply apparatus 100.

Illustratively, at a certain charging stage, the target output voltage is 20V and the first difference is 0.5V, then when the output voltage of the power supply apparatus 100 is less than 19.5V, the control circuit controls the valley-fill circuit 20 to start up to supply power to the output end of the power supply apparatus 100, thereby maintaining or pulling up the voltage of the output end of the power supply apparatus 100.

Of course, in other embodiments, when the voltage of the alternating current (AC) power supply is less than or equal to the first voltage, the valley-fill circuit 20 supplies power to the output end of the power supply apparatus 100. In this embodiment, the start time of the valley-fill circuit 20 is determined according to the voltage of the alternating current (AC) power supply.

In some embodiments, when the output voltage of the second-stage conversion circuit 60 is lower than the output voltage of the valley-fill circuit, the valley-fill circuit can be triggered to start to supply power to the output end Vo of the power supply apparatus 100.

In a specific embodiment of the valley-fill circuit 20, the valley-fill circuit 20 includes an induced winding n2. The induced winding n2 is disposed on the secondary side of the transformer 51. When the primary winding n1 is connected to alternating current, the iron core of the transformer 51 generates an alternating magnetic field, and an induced electromotive force is generated on the induced winding n2, which is provided to the valley-fill circuit 20 as an energy input.

The transformer 51 in this embodiment can be the transformer 51 in the first-stage conversion circuit 50 in the above-mentioned embodiments, so only one induced winding n2 needs to be added. In this way, the existing windings of the transformer 51 can be used, thereby simplifying the circuit complexity of the power supply apparatus 100. Of course, an independent transformer can also be provided separately.

In some embodiments, the valley-fill circuit 20 further includes a voltage conversion unit. The voltage conversion unit is electrically connected with the induced winding n2 to transform the voltage on the induced winding n2.

According to the voltage of the alternating current (AC) power supply and the set value required by the power supply apparatus 100, the voltage conversion unit can be used as a step-up conversion unit or a step-down conversion unit. Through the arrangement of the voltage conversion unit, the valley-fill circuit 20 can be switched in so as to reduce the obviousness of the fluctuation of the output voltage of the power supply apparatus 100 when the power is supplied to the output end of the power supply apparatus 100, and the natural start and natural exit of the delivery of electricity by valley-fill circuit 20 can be realized.

Illustratively, in an embodiment, the output voltage of the voltage conversion unit is within the range of target output voltage × (1±10%). Specifically, it can be voltage × (1±5%), voltage × (1±3%), or the like. Specifically, it can be set according to the voltage regulation accuracy of the valley-fill circuit 20 and the voltage output error allowed by the power supply apparatus 100.

In a specific circuit embodiment of the valley-fill circuit 20, the voltage conversion unit includes a buck circuit. The buck circuit has an energy storage capacitor for storing the power of the induced winding n2, and the capacity of the energy storage capacitor is less than the second preset threshold.

The buck circuit can step down the voltage on the induced winding n2 and transmit it to the voltage output end of the power supply apparatus 100. In FIG. 3, the buck circuit includes an energy storage capacitor Cbuck, an inductor Lv, a control switch tube, a second diode D2, and a fifth capacitor C5.

In FIG. 3, in the valley-fill circuit 20, the MOS transistor Qv is controlled by the control circuit, and the MOS transistor Qv is a high frequency switch. The role of Qv is to maintain the stability of capacitor C5. When the output voltage Vo of the power supply apparatus 100 is relatively low, the buck circuit provides power to the fourth capacitor C4 and the capacitor Co through the diode D3 to maintain the stability of the output voltage of the power supply apparatus 100.

Further, the valley-fill circuit 20 further includes an input-side rectifier circuit, the input end of the input-side rectifier circuit is connected to the output end of the induced winding n2, and the output end of the input-side rectifier circuit is connected to one end of the energy storage capacitor. The input-side rectifier circuit may be a half-wave rectifier circuit or a full-wave rectifier circuit.

Specifically, in FIG. 3, the input-side rectifier circuit is a first diode D1, the anode of the first diode D 1 is connected to one end of the induced winding n2, and the cathode is connected to one end of the energy storage capacitor Cbuck.

Illustratively, during the operation of the valley-fill circuit 20, when the end of the induced winding n2 connected to the anode of the first diode D1 has a positive voltage, the voltage on the induced winding n2 is applied to the energy storage capacitor Cbuck, so that the energy storage capacitor Cbuck can be charged. The switch tube Qv, the freewheeling diode D2 and the filter inductor Lv constitute the buck circuit. When the output voltage of the second-stage conversion circuit 60 is relatively low and lower than the output voltage of the buck circuit, the diode D3 is naturally turned on, the energy storage capacitor Cbuck supplies power to C4 and Co through the buck circuit, and maintains the output voltage of the power supply apparatus 100. When the output voltage of the second-stage conversion circuit 60 is relatively high and higher than the output voltage of the buck circuit, the diode D3 is reversely turned off, and the buck circuit stops outputting power to the output end of the power supply apparatus 100 and is in a no-load state.

Illustratively, for example, the voltage of the alternating current (AC) power supply is 180Vac. At this time, the first-stage conversion circuit 50 is in the half-bridge operating mode, the power supply apparatus 100 outputs a target power of 70W, and the valley voltage output by the first-stage conversion circuit 50 is very low-and the voltage of the output end of the power supply apparatus 100 cannot be stable. By adding the valley-fill circuit 20, and adjusting parameters such as the capacity of the energy storage capacitor Cbuck and the turns ratio of the induced winding n2, the voltage of the output end of the power supply apparatus 100 can be maintained to ensure smooth charging.

In this embodiment, the types of the energy storage capacitor Cbuck and the fifth capacitor C5 can be both multilayer ceramic capacitors (MLCC), film capacitors, ceramic capacitors, and electrolytic capacitors with capacities less than the first preset threshold; these capacitors can be in the form of chip capacitors to reduce the size of the power supply apparatus 100.

Further, when the difference between the set value and the output voltage of the second-stage conversion circuit 60 is greater than the first difference and less than the second difference, the control circuit controls the valley-fill circuit 20 together with the second-stage conversion circuit 60 to supply power to the output end of the power supply apparatus 100.

The second difference can be greater than the first difference. The set value of the second difference can be set according to the undervoltage threshold of the second-stage conversion circuit 60, so that when the difference between the set value and the output voltage of the second-stage conversion circuit 60 is the second difference, at this time, the second-stage conversion circuit 60 approximately reaches the undervoltage threshold.

Further, when the first DC voltage is less than or equal to the undervoltage threshold of the second-stage conversion circuit 60, the second-stage conversion circuit 60 is controlled to stop outputting power. At this stage, the second-stage conversion circuit 60 is roughly in an undervoltage state (that is, a state in which the operating voltage of the second-stage conversion circuit 60 is lower than the rated voltage, and the operating voltage of the second-stage conversion circuit 60 is determined based on the working voltage of the chip inside the second-stage conversion circuit 60, or artificially limited, to avoid working in a too low voltage environment). In order to avoid the second-stage conversion circuit 60 working in an undervoltage state and causing damage to internal components, in this example, the second-stage conversion circuit 60 can be turned off. At this time, the output of the valley-fill circuit 20 is used, on its own, as the output of the power supply apparatus 100.

At the same time, the output end of the rectifier circuit 30 is connected in parallel with the first filter capacitor 40. When the second-stage conversion circuit 60 stops outputting power, the energy of the rectifier circuit 30 no longer transmits to the subsequent stage, so that the voltage on the first filter capacitor 40 can be maintained.

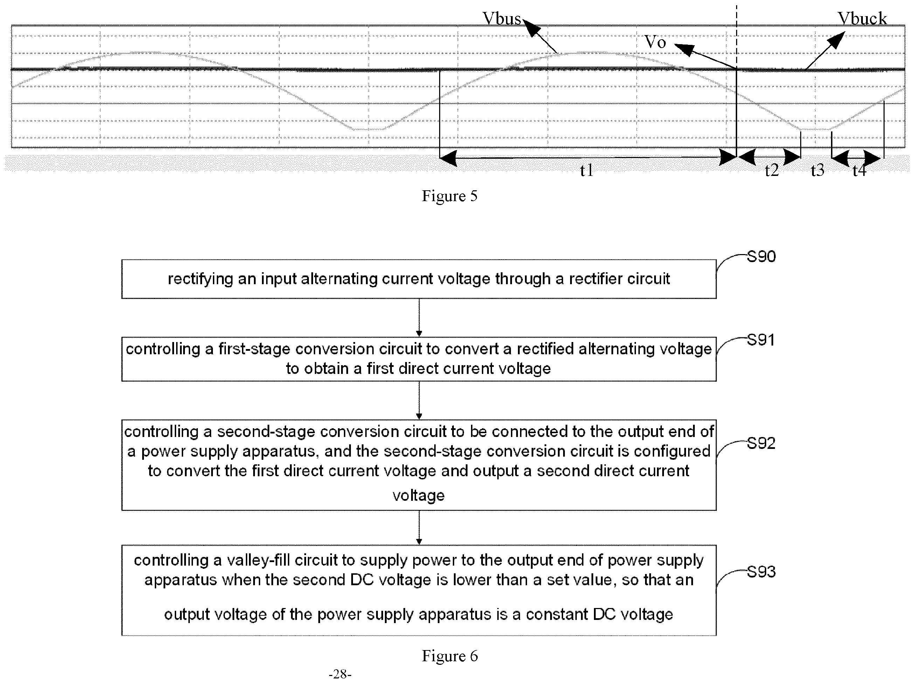

With reference to FIG. 4 and FIG. 5, FIG. 4 is a simulation waveform of partial voltage nodes in the circuit of the power supply apparatus 100 according to the present disclosure; and Figure 5 is a simulation waveform of the output voltage of the power supply apparatus 100 circuit, the output voltage of the second-stage voltage conversion circuit 60, and the output voltage of the valley-fill circuit 20 according to the present disclosure. Here, based on FIG.4 and FIG. 5, the process of a valley-fill circuit 20 and second-stage conversion circuit 60 is described, below.

In FIG. 4, V_bulk is the voltage on the energy storage capacitor Cbuck, Vrec is the output voltage of the rectifier circuit 30 without the valley-fill circuit 20 (that is, the voltage across the first capacitor), and Vrec_in is the output voltage of the rectifier circuit 30 after the valley-fill circuit 20 is added. In the following description, the valley-fill circuit 20 is used as a buck circuit, and the secondary conversion circuit 60 is used as a buck-boost as an example for illustration. In FIG. 5, Vo is the output voltage of the power supply apparatus 100, Vbus is the output voltage of the second-stage conversion circuit 60, and Vbuck is the output voltage of the valley-fill circuit 20.

During the time period t1, since the output voltage of the rectifier circuit 30 is relatively high, the output voltage of the second-stage conversion circuit 60 is relatively high. At this time, the diode D3 in the buck circuit (valley-fill circuit 20) is reversely turned off, and the buck circuit is in no load state, and Vrec_in coincides with the Vrec curve, and the energy storage capacitor Cbuck is charged and stores energy and maintains a certain voltage. During the time period t2, when the output voltage of the rectifier circuit 30 is relatively low and the output voltage of the second-stage conversion circuit 60 is lower than the output voltage of the buck circuit, the diode D3 is turned on, and the energy storage capacitor Cbuck charge C4, Co through the buck circuit to maintain the output voltage Vo of the power supply apparatus 100, and the buck circuit and the buck-boost circuit jointly supply output power. Since the input voltage of the buck-boost circuit is lower than the rated voltage, the buck-boost circuit, at this point of time, is in a current-limiting state. If there is no power support provided by the valley-fill circuit 70, the voltage across the first filter capacitor C1 will decay rapidly in the time period t2. During the time period t3, when the output voltage of the first-stage conversion circuit 50 continues to decrease to the input undervoltage threshold of the buck-boost circuit, the buck-boost circuit stops working, and the buck circuit continues to maintain the output voltage Vo and full output power of the power supply apparatus 100 during the time period t3. At this time, since the first-stage conversion circuit 50 and the buck-boost circuit do not transmit power, the energy of the capacitor C1 is kept. During the time period t4, as the rectified voltage of the rectifier circuit 30 enters the next rising edge of the "steamed bun" waveform, when the output voltage of the first-stage conversion circuit 50 reaches the undervoltage recovery threshold of the buck-boost circuit, the buck-boost circuit starts to work and gradually shares output power. When the output voltage of the buck-boost circuit is higher than the output voltage of the buck circuit, the diode D3 is reversely turned off, and the buck circuit is in a no-load state. At this time, the buck-boost circuit independently maintains Vo and all output power.

FIG. 6 is a flowchart showing an embodiment of a charging method according to the present disclosure. Based on this, the present disclosure also proposes a charging method, which can be applied to the power supply apparatus 100 in the above embodiments.

In one embodiment, the charging method is applied to a power supply apparatus. The power supply apparatus 100 includes a rectifier circuit 30, a first-stage conversion circuit 50, a second-stage conversion circuit 60, and a valley-fill circuit 20. Here, the power supply apparatus may be the power supply apparatus 100 in the above-mentioned embodiments, or may be a power supply apparatus with a valley-fill circuit or other types. Taking the power supply apparatus 100 in the above embodiments as an example, the method can include:
S90, controlling the rectifier circuit 30 to rectify the input AC voltage;
S91, controlling the first-stage conversion circuit 50 to convert the rectified DC voltage to obtain a first DC voltage;
S92, controlling the second-stage conversion circuit 60 to be connected to the output end of the power supply apparatus 100, and the second-stage conversion circuit 60 is configured to convert the first DC voltage and output a second DC voltage, wherein the voltage value of the second DC voltage is lower than the voltage value of the first DC voltage;
S93, controlling the valley-fill circuit 20 to supply power to the output end of power supply apparatus 100, when the second DC voltage is lower than the set value, so that the output voltage of the power supply apparatus 100 is a constant DC voltage.

In one embodiment, when the second DC voltage is lower than the set value, the valley-fill circuit is controlled to supply power to the second-stage conversion circuit, so that the output second DC voltage is a constant DC voltage.

When the difference between the set value and the second DC voltage is greater than the first difference and less than the second difference, the valley-fill circuit 20 and the second-stage conversion circuit 60 are controlled to jointly supply power to the output end Vo of the power supply apparatus 100.

In one embodiment, when the second DC voltage is lower than the set value, the valley-fill circuit is controlled to supply power to the second-stage conversion circuit, so that the output second DC voltage is a constant DC voltage.

When the first DC voltage is less than or equal to the undervoltage threshold of the second-stage conversion circuit 60, the second-stage conversion circuit 60 is controlled to stop outputting power, and the valley-fill circuit 20 outputs power to the output end of the power supply apparatus 100 alone.

In one embodiment, when the second DC voltage is lower than the set value, the valley-fill circuit 20 is controlled to supply power to the second-stage conversion circuit, so that the output second DC voltage is a constant DC voltage.

When the second DC voltage is greater than the output voltage of the valley-fill circuit 20, the valley-fill circuit 20 is controlled to stop.

For related explanations in the method embodiments, please refer to the above-mentioned embodiments of the power supply apparatus 100.

In addition, it should be noted that the above-mentioned drawings are only schematic illustrations of the processes included in the methods according to the exemplary embodiments of the present disclosure, and are not intended to be limiting. It is easy to understand that the processes shown in the above drawings do not indicate or limit the chronological order of these processes. In addition, it is also readily understood that these processes may be performed synchronously or asynchronously, for example, in multiple modules.

This embodiment also provides a charging control apparatus, including a storage unit and a processing unit; the storage unit stores a charging control program; and the processing unit is configured to execute the steps of the above charging method when running the charging control program.

From the description of the above embodiments, those skilled in the art can understand that the exemplary embodiments described herein may be implemented by software, or may be implemented by software combined with necessary hardware. Therefore, the technical solutions according to the embodiments of the present disclosure may be embodied in the form of software products, and the software products may be stored in a non-volatile storage medium (which may be CD-ROM, U disk, mobile hard disk, etc.) or on the network , including several instructions to cause a computing device (which may be a personal computer, a server, a terminal device, or a network device, etc.) to execute the method according to an embodiment of the present disclosure.

The present disclosure also presents schematic diagrams of computer-readable storage media. The computer-readable storage medium may employ a portable compact disc read only memory (CD-ROM) and include program codes, and may be executed on a terminal device such as a personal computer. However, the program product of the present disclosure is not limited thereto, and in the present disclosure, a readable storage medium may be any tangible medium that contains or stores a program that can be used by or in conjunction with an instruction execution system, apparatus, or device.

The computer-readable medium can carry one or more programs, which when executed by a processor, the computer-readable medium can implement the battery charging method shown in FIG. 6.

Exemplary embodiments of the present disclosure also provide an electronic device system, which includes an electronic device and the above-mentioned power supply apparatus, where the power supply apparatus is used to charge the electronic device (wireless charging or wired charging).

The electronic device may be a mobile phone, a tablet computer, a notebook computer, a smart TV, a car computer, a watch, a wristband, glasses, a headset, or a helmet and other devices.

While the present disclosure has been described with reference to several exemplary embodiments, it is to be understood that the terminology used is of description and illustration, and not of limitation. Since the present disclosure can be embodied in many forms without departing from the spirit or spirit of the invention, it is to be understood that the above-described embodiments are not limited to any of the foregoing details, but are to be construed broadly within the spirit and scope defined by the appended claims. Therefore, all changes and modifications that come within the scope of the claims or their equivalents should be covered by the appended claims.

## Claims

1. A power supply apparatus, comprising:
a rectifier circuit configured to rectify an input alternating current (AC) voltage;
a first-stage conversion circuit configured to convert a rectified direct current (DC) voltage to obtain a first DC voltage;
a second-stage conversion circuit connected to an output end of the power supply apparatus, the second-stage conversion circuit being configured to convert the first DC voltage to output a second DC voltage, wherein a voltage value of the second DC voltage is lower than a voltage value of the first DC voltage; and
a valley-fill circuit connected to the output end of the power supply apparatus, the valley-fill circuit being configured to supply power to the output end of the power supply apparatus when the second DC voltage is lower than a set value, so that an output voltage of the power supply apparatus is a constant DC voltage.

2. The power supply apparatus of claim 1, wherein the first-stage conversion circuit comprises a transformer having a primary winding and an induced winding, the primary winding being configured to input the rectified DC voltage;
wherein the valley-fill circuit is connected with the induced winding to obtain electric energy through the induced winding.

3. The power supply apparatus of claim 2, wherein the valley-fill circuit further comprises a voltage conversion unit, and the output end of the voltage conversion unit is the output end of the valley-fill circuit;
wherein the voltage conversion unit is electrically connected to the induced winding to convert a voltage obtained from the induced winding.

4. The power supply apparatus of claim 3, wherein the voltage conversion unit comprises a buck circuit having an energy storage capacitor configured to store electric energy obtained from the induced winding.

5. The power supply apparatus of claim 4, wherein the energy storage capacitor includes one or more of: a chip capacitor, a film capacitor, a ceramic capacitor, a multi-layer ceramic capacitor (MLCC) capacitor, and an electrolytic capacitor with a capacity less than a first preset threshold.

6. The power supply apparatus of claim 4, wherein the valley-fill circuit further comprises an input-side rectifier circuit, the input end of the input-side rectifier circuit being connected to the output end of the induced winding, and the output end of the input-side rectifier circuit being connected to one end of the energy storage capacitor.

7. The power supply apparatus of claim 1, wherein the first-stage conversion circuit further comprises a chopper circuit and a secondary rectifier circuit;
wherein the chopper circuit has a full-bridge operating mode and a half-bridge operating mode, and when the input DC voltage rises to a first voltage range, the chopper circuit operates in the half-bridge operating mode;
wherein when the input DC voltage drops to a second voltage range, the chopper circuit operates in a full-bridge operating mode;
wherein voltages in the first voltage range are all greater than the voltages in the second voltage range.

8. The power supply apparatus of claim 1, wherein the first-stage conversion circuit further comprises a transformer;
wherein after the rectifier circuit rectifies the AC voltage into pulsating DC voltage, the chopper circuit is configured to perform direct-current inversion on the pulsating DC voltage, the transformer configured to perform voltage transformation on the inverted AC voltage, and the secondary rectifier circuit further configured to rectify the output AC current from a secondary winding of the transformer, to form a DC current.

9. The power supply apparatus of claim 1, wherein the second-stage conversion circuit comprises one or more cascades of a buck circuit, a boost circuit, a buck-boost circuit, and a charge pump circuit.

10. The power supply apparatus of claim 1, wherein the power supply apparatus comprises a control circuit;
wherein the control circuit is configured to control the valley-fill circuit and the second-stage conversion circuit to jointly supply power to the output end of the power supply apparatus when a difference between the set value and the second DC voltage is greater than a first difference and less than a second difference.

11. The power supply apparatus of claim 10, wherein the control circuit is configured to control the second-stage conversion circuit to stop outputting power when the first DC voltage is less than or equal to an undervoltage threshold of the second-stage conversion circuit.

12. The power supply apparatus of claim 10, wherein the control circuit is configured to control the valley-fill circuit to stop operating when the second DC voltage is greater than an output voltage of the valley-fill circuit.

13. The power supply apparatus of claim 1, wherein the first-stage conversion circuit comprises a first filter capacitor, and the first filter capacitor is connected in parallel with the output end of the rectifier circuit.

14. The power supply apparatus of claim 13, wherein the first filter capacitor comprises one or more of a chip capacitor, a film capacitor, a ceramic capacitor, a multilayer ceramic capacitor (MLCC), and an electrolytic capacitor with a capacity less than a first preset threshold.

15. A charging method, the method comprising:
rectifying an input alternating current (AC) voltage through a rectifier circuit;
controlling a first-stage conversion circuit to convert a rectified direct current (DC) voltage to obtain a first DC voltage;
controlling a second-stage conversion circuit to be connected to an output end of a power supply apparatus, and the second-stage conversion circuit is configured to convert the first DC voltage and output a second DC voltage, wherein a voltage value of the second DC voltage is lower than a voltage value of the first DC voltage; and
controlling a valley-fill circuit to supply power to the output end of the power supply apparatus when the second DC voltage is lower than a set value, so that an output voltage of the power supply apparatus is a constant DC voltage.

16. The charging method of claim 15, wherein controlling the valley-fill circuit to supply power to the output end of the power supply apparatus when the second DC voltage is lower than the set value, so that the output voltage of the power supply apparatus is the constant DC voltage comprises:
controlling the valley-fill circuit and the second-stage conversion circuit to jointly supply power to the output end of the power supply apparatus when a difference between the set value and the second DC voltage is greater than a first difference and less than a second difference.

17. The charging method of claim 15, wherein controlling the valley-fill circuit to supply power to the output end of the power supply apparatus when the second DC voltage is lower than the set value, so that the output voltage of the power supply apparatus is the constant DC voltage comprises:
controlling the second-stage conversion circuit to stop outputting power, and the valley-fill circuit to output power to the output end of the power supply apparatus alone, when the first DC voltage is less than or equal to an undervoltage threshold of the second-stage conversion circuit.

18. The charging method of claim 15, wherein controlling the valley-fill circuit to supply power to the output end of the power supply apparatus when the second DC voltage is lower than the set value, so that the output voltage of the power supply apparatus is the constant DC voltage comprises:
controlling the valley-fill circuit to stop operating when the second DC voltage is greater than an output voltage of the valley-fill circuit.

19. An electronic device system, comprising:
an electronic device; and
a power supply apparatus according to any one of claims 1-14 configured to charge the electronic device.

20. A computer storage medium storing a charging control program, the charging control program implements the steps of the charging method according to any one of claims 15 to 18 when the charging control program is executed by at least one processor.
